Europäisches Patentamt

(19) European Patent Office

Office européen des brevets

(11) **EP 0 926 184 A1**

(12) **EUROPEAN PATENT APPLICATION**

(43) Date of publication:
30.06.1999 Bulletin 1999/26

(51) Int. Cl.$^6$: **C08G 73/10**, C08G 69/48

(21) Application number: 98124560.8

(22) Date of filing: 22.12.1998

(84) Designated Contracting States:
AT BE CH CY DE DK ES FI FR GB GR IE IT LI LU
MC NL PT SE
Designated Extension States:
AL LT LV MK RO SI

(30) Priority: 25.12.1997 JP 35835797
25.12.1997 JP 35835897

(71) Applicant:
MITSUI CHEMICALS, INC.
Tokyo (JP)

(72) Inventors:
• Machida, Katsuhiko
Yokohama-shi, Kanagawa (JP)

• Ogawa, Shinji
Yokohama-shi, Kanagawa (JP)
• Katoh, Toshio
Kawaguchi-shi, Saitama (JP)
• Sukegawa, Makoto
Yokohama-shi, Kanagawa (JP)
• Irizato, Yoshihiro
Yokohama-shi, Kanagawa (JP)

(74) Representative:
Strehl Schübel-Hopf & Partner
Maximilianstrasse 54
80538 München (DE)

(54) **Process for production of polyamino acid derivative**

(57) A process for producing a polyamino acid derivative containing an acidic catalyst in an amount of 1% by weight or less, or no acidic catalyst, which process comprises an extraction step of extracting and removing an acidic catalyst with an extraction solvent from a polyamino acid derivative containing the acidic catalyst,

wherein the extraction solvent does not substantially dissolve the polyamino acid derivative and dissolves at least part of the acidic catalyst in the extraction step, and the extraction temperature employed in the extraction step is 60°C or higher but 300°C or lower.

## Description

BACKGROUND OF THE INVENTION

1. Field of the Invention

The present invention relates to a process for production of polyamino acid derivative. More particularly, the present invention relates to a process for production of polyamino acid derivative significantly low in the amount of the acidic catalyst contained therein as an impurity.

2. Description of the Prior Art

[Technical background of polyamino acid derivative and process for production thereof]

Polyamino acid derivatives have biodegradability and are therefore gentle to global environment and, moreover, when taken into the living body, are digested by enzymatic activities and absorbed. In addition, polyamino acid derivatives are found to show no antigenicity in vivo and produce no toxic decomposition products; therefore, they are gentle also to human beings.
The biodegradability of polyamino acid derivatives contributes greatly in solving various problems encountered with conventional nonbiodegradable materials, for example, large burdens to environment associated with incineration of or reclamation of waste polymers.
Polysuccinimide, which is a polyamino acid derivative, is an intermediate suitable for production of other polyamino acid derivatives such as polyaspartic acid, crosslinked-polyaspartic acid or the like.
Polyaspartic acid is a polymer which is very useful as a detergent component, an anti-scaling agent, a mineral-dispersing agent, etc. and which can replace conventional nonbiodegradable materials. Crosslinked-polyaspartic acid, which has a high water absorptivity, is a polymer which is very useful as a water-absorbing material, a water-holding material, etc. and which can replace conventional nonbiodegradable materials.
Polysuccinimide can be produced by, for example, a process by P. Neri et al. (Journal of Medicinal Chemistry, 1973, Vol. 16, No. 8). P. Neri et al. report, in the process for production of polysuccinimide by polymerization of aspartic acid, a relation between the amount of phosphoric acid catalyst used and the molecular weight of polysuccinimide formed.
In the report by P. Neri et al., in order to produce a polysuccinimide having an weight-average molecular weight of about 40,000, which is a particularly useful polyamino acid derivative, it is necessary to use about 0.3 to 2 parts by weight of a phosphorus acid catalyst per 1 part by weight of aspartic acid which is the raw material, in the polymerization of the polysuccinimide. Needless to say, the polysuccinimide obtained by polymerization using the large amount of phosphorus acid catalyst, contains a high concentration of the phosphorus acid catalyst. Hence, after the polymerization, it is necessary to remove the phosphorus acid catalyst from the polysuccinimide.

[Method for separation of acidic catalyst from polyamino acid derivatives]

The methods for removing an acidic catalyst from a polysuccinimide, which is one of polyamino acid derivatives, include, for example, the following methods (1) to (5).

(1) P. Neri et al. report a technique of producing a polysuccinimide using a phosphoric acid catalyst, dissolving the formed polymer containing the phosphoric acid catalyst, directly into dimethylformamide (DMF) to give rise to reprecipitation of the polymer, and washing the resulting polymer precipitate with water several times to remove the catalyst from the polymer (Journal of Medicinal Chemistry, 1973, Vol. 16, No. 8). In the literature, however, there is no description as to the temperature condition used in the washing after reprecipitation, the amount of phosphoric acid catalyst remaining in the formed polymer, and the amount of water used for washing.
(2) EP-A-707026 (corresponding to JP-A-8-231710) discloses a technique regarding the removal of acidic catalyst, that is, a technique of dissolving a polyimide (i.e. a polysuccinimide) in a polar aprotic solvent (e.g. DMF, formamide or dimethyl sulfoxide) and then adding thereto a poor solvent to the polyimide (e.g. water, ether, ethanol or acetone) to give rise to reprecipitation to obtain a purified polyimide. In the literature, however, there is no specific suggestion or disclosure as to the amount of solvent used for acidic catalyst separation, the temperature condition used in the washing after reprecipitation, and the amount of acidic catalyst remaining in the formed polymer.
(3) The same EP-A-707026 discloses another technique regarding the removal of acidic catalyst, that is, a technique of polymerizing aspartic acid using a phosphoric acid catalyst and then washing the formed polyimide (i.e. polysuccinimide) containing the phosphoric acid catalyst, using a poor solvent to the polyimide (e.g. water, ether, ethanol or acetone) to obtain a purified polyimide. In the literature, however, there is no specific suggestion or disclosure as to the temperature condition of washing and the amount of acidic catalyst remaining in the formed polymer. Meanwhile, in Comparative Examples 9 and 10 of the literature, it is disclosed that water is required for washing of the formed polymer in a large amount, i.e. 155 times (Comparative Example 9) and 129 times (Comparative Example 10) the weight of polysuccinimide.

(4) The same EP-A-707026 discloses still another technique regarding the removal of acidic catalyst, that is, a technique of conducting a neutralization treatment after production of polysuccinimide but before washing and removal of the phosphoric acid catalyst contained in the polymer. When the neutralization treatment is conducted, however, not a polysuccinimide but a polyaspartic acid salt is obtained. Furthermore, the phosphoric acid is recovered in the form of a salt of phosphoric acid. In this case, either, there is no specific suggestion or disclosure as to the conditions of washing.

(5) WO-A-97/28219 discloses a technique of polymerizing aspartic acid using a phosphoric acid catalyst and then washing the formed polysuccinimide containing the phosphoric acid catalyst, directly with water to obtain a polysuccinimide wherein the content of phosphoric acid catalyst is 0%. In the literature, however, there is no specific suggestion or disclosure as to the temperature condition of washing and the amount of water used.

[Problems of prior techniques]

The present inventors made investigation on each of the above-mentioned prior techniques and, as a result, thought that when a polyamino acid derivative is produced according to the prior techniques under the conditions regarded to be favorable, use of an acidic catalyst involves at least the following problems (a) to (d).

(a) When an acidic catalyst is used, there are at least the following problems i) to vi) because the formed polymer contains the acidic catalyst.

i) The presence of the acidic catalyst in the polymer may invite moisture absorption by the polymer with the lapse of time.
ii) The presence of the acidic catalyst in the polymer may invite coloration of the polymer with the lapse of time.
iii) The presence of the acidic catalyst in the polymer may invite deterioration of the polymer with the lapse of time.
iv) When the polymer is used as a life-care product or as a material therefor, the presence of the acidic catalyst in the polymer may make the product or the material acidic with the lapse of time, which may become a problem.
v) When the polymer is reacted with an acidic compound or a basic compound in, for example, a chemical modification reaction or a hydrolysis reaction, the presence of the acidic catalyst in the polymer makes it difficult to conduct the reaction stoichiometrically. Further, neutralization of the polymer may pose a problem. That is, when a polysuccinimide is crosslinked to produce a crosslinked polysuccinimide, the presence of an acidic catalyst in the polymer makes difficult the control of crosslinking degree, resulting in reduced water absorptivity of crosslinked product and in reduced yield.
vi) When no recovery or recycling of catalyst is conducted, a large amount of an acidic catalyst is used for production of a polyamino acid derivative and is discharged. It results in low efficiency. In such a case, when the derivative is wasted, there is the fear that the phosphorus or the like in the acidic catalyst induces pollution and/or eutrophication of rivers, lakes, marshes and the sea.

(b) In the operation as seen in the above-mentioned technique (1) or (2), which comprises dissolving both a polymer and an acidic catalyst contained in the polymer, in an aprotic polar solvent such as DMF (boiling point = 153°C), formamide (boiling point = 210°C), dimethyl sulfoxide (boiling point = 189°C)) or the like and then adding the resulting solution to an excess amount of a polymer-precipitating solvent (which is a poor solvent to a polysuccinimide but a good solvent to the acidic catalyst) to reduce the content of the acidic catalyst contained in the polymer, there are, for example, the following problems i) to v).

i) The aprotic polar solvent such as DMF or the like has a high boiling point, resulting in remaining of the solvent in the polymer.
ii) The high boiling point of the solvent makes difficult disposal of a large amount of the waste liquid generated by the operation (i.e. washings containing high-boiling organic solvent, polymer-precipitating solvent, acidic catalyst, etc.).
iii) The operation is complicated.
iv) The recycling of acidic catalyst and/or solvent is difficult.

v) The catalyst contains a deterioration product or decomposition product of the solvent used for catalyst separation and, when reused as a catalyst for production of polyamino acid derivatives, may adversely affect said production.

(c) In the techniques such as the above (3) and (5), which comprises washing the acidic catalyst-containing polymer directly with a poor solvent, there are, for example, the following problems i) to iii).

i) When water is used as the poor solvent, a large amount of water is necessary, which does not satisfy a demand of water saving. Furthermore, it requires a large energy for the recovery of the solvent and/or the acidic catalyst and does not satisfy a demand of energy saving.
ii) It is difficult to recover, for recycling, an acidic catalyst from the washings containing a low concentration of the acidic catalyst, generated in the washing operation.
iii) The acidic catalyst contained in the washings, generated in the washing operation may invite pollution and/or eutrophication of rivers, lakes, marshes and the sea.

(d) In the techniques such as the above (4), which comprises removing no phosphoric acid catalyst and subjecting the polysuccinimide to hydrolysis and neutralization simultaneously, there are, for example, the following problems i) to iii).

i) A large mount of the acidic catalyst used in production of polyamino acid derivative is totally discharged in the form of salt, which may invite pollution and/or eutrophication of rivers, lakes, marshes and the sea.
ii) When a polysuccinimide low in acidic catalyst content is an intended product, at least part of the polysuccinimide hydrolyzes in the step of neutralization to form a polyaspartic acid salt, which is not preferred.
iii) Since the acidic catalyst becomes a salt, the salt cannot be reused or recycled in production of polyamino acid derivative unless it is subjected to ion exchange or the like, which makes difficult the recycling of the acidic catalyst.

SUMMARY OF THE INVENTION

The present inventors found that there is an urgent need to solve the above-mentioned problems of the prior art, and intended to achieve the following tasks ⟨1⟩to ⟨3⟩ These tasks have been thought of by the present inventors for the first time and are per se novel.

⟨1⟩To provide a polyamino acid derivative containing 1% by weight or less, based on the dry weight of the polyamino acid derivative, of an acidic catalyst, in high efficiency.
⟨2⟩To recover, for recycling, the acidic catalyst used in the production of a polyamino acid derivative, using low energy.
⟨3⟩In the operation of reducing the content of the acidic catalyst in the produced polyamino acid derivative, with an extraction solvent, to recover, for recycling, the extraction solvent from the extract (the washings containing an organic solvent and/or water, the acidic catalyst, etc.) obtained in said operation, using low energy.

The above objects can be achieved by a process for producing a polyamino acid derivative containing an acidic catalyst in an amount of 1% by weight or less, or no acidic catalyst, which process comprises an extraction step (Step A) of extracting and removing an acidic catalyst with an extraction solvent from a polyamino acid derivative containing the acidic catalyst,wherein the extraction solvent does not substantially dissolve the polyamino acid derivative and dissolves at least a part of the acidic catalyst in the extraction step, and the extraction temperature employed in the extraction step is 60°C or higher but 300°C or lower.

DETAILED DESCRIPTION OF THE PREFERRED EMBODIMENTS

[Polyamino acid derivative]

In the present invention, the polyamino acid derivative includes, for example, a polysuccinimide, a polyaspartic acid, a crosslinked polymer thereof, and a derivative thereof chemically modified with a pendant group. In the polyamino acid derivative, the repeating unit of the main chain basic skeleton may be a copolymer of an aspartic acid unit and an amino acid unit other than aspartic acid. The copolymer may be any of a block copolymer, a random copolymer and a graft copolymer.
In the present polyamino acid derivative, the repeating unit consisting of aspartic acid is called "polyaspartic acid residue" independently of the bonding style. There is no particular restriction as to the number of the repeating units consisting of the polyaspartic acid residue; however, the number is preferably more than 1%, more preferably more than 10% based on the total repeating units constituting the molecule of the polyamino acid derivative. Specifically, the repeating unit of the main chain basic skeleton of the polyamino acid derivative consists preferably of the aspartic acid residue alone or a copolymer of aspartic acid and glutamic acid or lysine, particularly preferably of the aspartic acid residue alone viewed from the industrial production of the polyamino acid derivative.

In the main chain basic skeleton of polyaspartic acid or crosslinked-polyaspartic acid (which are both a polyamino acid derivative), the amide bond in the main chain is an $\alpha$ bond or $\beta$ bond. The $\alpha$ bond is formed when an amino group bonds to the $\alpha$-position carboxyl group of aspartic acid, and the $\beta$ bond is formed when an amino group bonds to the $\beta$-position carboxyl group of aspartic acid. In the main chain basic skeleton of polyaspartic acid or crosslinked polyaspartic acid, the amide bond ordinarily exists as a mixture of the $\alpha$ bond and the $\beta$ bond. The type of the amide bond is not particularly restricted in the present invention.

The structure of the main chain moiety of the polyamino acid derivative may be a linear structure or a branched structure. The molecular weight of the main chain moiety of the polyamino acid derivative has no particular restriction, but is preferred to be high. For example, a crosslinked-polyaspartic acid has a higher ability as a water-absorptive material, a water-holding material or the like when the molecular weight of the main chain moiety is higher. The weight average molecular weight of the main chain moiety of polyamino acid derivative is preferably 30,000 or higher, more preferably 50,000 or higher, most preferably 80,000 or higher.

There is no particular restriction as to the bond of the crosslinked moiety of the polyamino acid derivative. The bond can be, for example, an amide bond, an ester bond and a thioester bond. These bonds may be present alone or in a mixture of a plurality of kinds. There is no particular restriction, either, as to the amount of the crosslinked moiety; however, the number of the repeating units of the crosslinked moiety is preferably 0.001 to 30%, more preferably 0.01 to 10% based on the total repeating units of the polymer.

[Raw materials for production of polyamino acid derivatives]

In the present invention, there is no particular restriction as to the raw materials used for production of polyamino acid derivatives. When aspartic acid is used as a raw material for constitution of the main chain basic skeleton of polyamino acid derivative, it may be any of a L-form, a D-form and a DL-form.

When a copolymer of aspartic acid and other amino acid is produced, there can be mentioned, for example, amino acids and amino acid derivatives such as 19 kinds of essential amino acids other than aspartic acid, L-ornithine, a series of $\alpha$-amino acids, $\beta$-alanine, $\gamma$-aminobutyric acid, neutral amino acids, acidic amino acids, $\omega$-esters of acidic amino acids, basic amino acids, N-substituted basic amino acids, aspartic acid-L-phenylalanine dimer (aspartame) and the like; and aminosulfonic acids such as L-cysteic acid and the like. The $\alpha$-amino acids may be any of L-forms, D-forms and DL-forms.

As to the raw material used for crosslinking, there is no particular restriction as long as the raw material is a polyfunctional compound capable of forming the bond of the crosslinked moiety. There can be mentioned, for example, polyfunctional compounds such as polyamine, polythiol, polyol and the like. Specific examples thereof are aliphatic polyamines such as hydrazine, ethylenediamine, propylenediamine, 1,4-butanediamine, pentamethylenediamine, hexamethylenediamine, heptamethylenediamine, octamethylenediamine, nonamethylenediamine, decamethylenediamine, undecamethylenediamine, dodecamethylenediamine, tetradecamethylenediamine, hexadecamethylenediamine, 1-amino-2,2-bis(aminomethyl)butane, tetraaminomethane, diethylenetriamine, triethylenetetramine and the like; alicyclic polyamines such as norbornenediamine, 1,4-diaminocyclohexane, 1,3,5-triaminocyclohexane, isophoronediamine and the like; aromatic polyamines such as phenylenediamine, tolylenediamine, xylylenediamine and the like; polyamines such as compound obtained by bonding of at least one molecule of a monoamino compound (e.g. basic amino acid, ester thereof or cystamine) by at least one disulfide linkage, derivative thereof and the like; aliphatic polythiols such as 1,2-ethanedithiol, 1,3-propanedithiol, 1,4-butanedithiol, 1,6-hexanedithiol, pentaerythritol and the like; alicyclic polythiols such as cyclohexanedithiol and the like; aromatic polythiols such as xylylenedithiol, benzenedithiol, toluenedithiol and the like; polythiol esters such as trimethylolpropane tris(thiogycolate), trimethylolpropane tris(3-mercaptopropionate), pentaerythritol tetrakis(thioglycolate), pentaerythritol tetrakis(3-mercaptopropionate) and the like; and polyols such as ethylene glycol, propylene glycol, polyethylene glycol, polypropylene glycol and the like. There can also be mentioned protein-constituting amino acids represented by lysine, cystine, ornithine; and salts and esters thereof.

Of these materials used for crosslinking, preferred are ethylenediamine, propylenediamine, 1,4-butanediamine, heptamethylenediamine, hexamethylenediamine, lysine, ornithine and cystamine because they have low odor and are highly reactive.

[Acidic catalyst]

The acidic catalyst used in production of polyamino acid derivative is generally an oxo-acid containing phosphoric acid, preferably orthophosphoric acid, pyrophosphoric acid, polyphosphoric acid, phosphorus pentoxide or a combination thereof.

In the present invention, since the acidic catalyst contained in the produced polyamino acid derivative as an impurity can be extracted and removed advantageously, the amount of the acidic catalyst used can be selected in a wide range as compared with the range employed in conventional techniques. The amount is preferably 0.01 to 2 parts by weight, more preferably 0.05 to 1 part by weight, particularly preferably 0.1 to 0.8 part by weight, most preferably 0.2 to 0.7 part by weight per part by weight of the monomer as a raw material.

[Extraction solvent]

The extraction solvent can be any solvent as long as it does not substantially dissolve the polyamino acid derivative and can dissolve at least part of the acidic catalyst, in the extraction step. Specifically, there can be used at least either one of an organic solvent, a mixture of an organic solvent and water and/or an acidic catalyst, water, and a mixture of water and an acidic catalyst. The extraction solvent is selected in view of mainly the extractability of extraction solvent for acidic catalyst, the temperature and pressure conditions employed in extraction, and the stability of extraction solvent per se.

As the standard of the extractability of extraction solvent, the dielectric constant $\varepsilon r$ of the solvent is mentioned. In the present invention, it is recommendable to use an extraction solvent having a dielectric constant at 25°C of preferably 2 or more, more preferably 10 or more, further preferably 15 or more, most preferably 19 or more.

Specific examples of the organic solvent used as the extraction solvent are alcohols having 1 to 9 carbon atoms, ketones having 3 to 9 carbon atoms, ethers having 3 to 9 carbon atoms and esters having 3 to 9 carbon atoms.

More specific examples of the organic solvent are alcohols such as methanol, ethanol, isopropyl alcohol, 1-butanol, 2-butanol, isobutyl alcohol, tert-butyl alcohol, 1-pentanol, 2-pentanol, 3-pentanol, isoamyl alcohol, 4-methyl-2-pentanol, 1-hexanol, 2-hexanol, 3-hexanol, cyclohexanol, 1-heptanol, 2-heptanol, 1-octanol and the like; ketones such as acetone, methyl ethyl ketone, methyl isobutyl ketone, 2-hexanone, 3-hexanone, 2-pentanone, 3-pentanone and the like; ethers such as diisopropyl ether and the like; and acetic acid esters such as methyl acetate, ethyl acetate, propyl acetate, butyl acetate, pentyl acetate, hexyl acetate and the like.

Of these organic solvents, preferred are methanol, ethanol, isopropyl alcohol, 1-butanol, 2-butanol, isobutyl alcohol, tert-butyl alcohol, 1-pentanol, 2-pentanol, isoamyl alcohol, 1-hexanol, 1-octanol, acetone, methyl isobutyl ketone, diisopropyl ether and butyl acetate; more preferred are methanol, ethanol, isopropyl alcohol, 1-butanol, 2-butanol, isobutyl alcohol, tert-butyl alcohol, 1-pentanol, 2-pentanol, acetone and diisopropyl ether; particularly preferred are methanol, isopropyl alcohol, 1-butanol, 2-butanol, isobutyl alcohol, acetone and diisopropyl ether; most preferred are methanol, isoproyl alcohol, 1-butanol, acetone and diisopropyl ether.

When an organic solvent capable of forming an azeotropic mixture with water is used, the organic solvent may be used in the form of the azeotropic mixture. It is also possible to use an organic solvent which is saturated with water under the temperature and pressure conditions of extraction, or to use water which is saturated with an organic solvent under the temperature and pressure conditions of extraction. When an organic solvent completely miscible with water is used, the organic solvent may be used in any desired mixture with water.

The extraction solvent may contain the acidic catalyst therein. The amount of the acidic catalyst may be determined, so that the extraction ability of the solvent is not remarkably decreased, in order to remove the acidic catalyst in the polymer at desired level. The amount of the acidic catalyst in the extraction solvent is generally 95% by weight or less, preferably 70% by weight or less, more preferably 50% by weight or less, particularly preferably 30% by weight or less, most preferably 10% by weight or less.

[Operation in extraction step]

Preferably, extraction is carried out in an atmosphere of low oxygen concentration. Particularly preferably, extraction is carried out in an inert gas atmosphere of nitrogen, carbon dioxide, argon or the like.

The extraction step is conducted by sufficiently contacting a solid polyamino acid derivative with an extraction solvent (which is a liquid, a noncondensable gas or a supercritical fluid) in a batchwise or continuous operation. Here, the noncondensable gas is a state of extraction solvent in which the temperature is higher than the critical temperature of the solvent and the pressure is lower than the critical pressure of the solvent; and the supercritical fluid is a state of extraction solvent in which the temperature is higher than the critical temperature of the solvent and the pressure is higher than the critical pressure of the solvent.

For example, the extraction can be conducted by an ordinary liquid extraction solvent when the extraction solvent has a critical temperature of lower than 300°C, and the extraction temperature employed in the extraction step is 60°C or higher but lower than the critical temperature. The extraction should be conducted by a noncondensable gas and/or supercritical fluid during the extraction when the extraction solvent has a critical temperature of lower than 300°C, and the extraction temperature employed in the extraction step is higher than the critical temperature but 300°C or lower.

The apparatus for sufficiently contacting the acidic catalyst-containing polyamino acid derivative with the extraction solvent includes an agitating tank, a fixed bed type extractor, a moving bed type extractor, a Rotocel extractor, a Lurgi extractor, etc.

The extraction operation is conducted in single-stage or multi-stage extraction. In the multi-stage extraction, the extraction solvent is used in a countercurrent flow or a concurrent flow with the countercurrent flow being preferred. In the multi-stage extraction, the acidic catalyst is contained in the extraction solvent in at least part of the stages.

In general, the amount of the extraction solvent used is preferably 0.1 to 100 parts by weight, more preferably 0.3 to 50 parts by weight, particularly preferably 0.5 to 30 parts by weight, most preferably 1 to 20 parts by weight per part by weight of the polyamino acid derivative. When the extraction solvent is used in excess, the concentration of acidic catalyst in extract becomes low and the efficiency of separation of acidic catalyst from extraction solvent becomes low. Meanwhile, when the extraction solvent is used in too small amount, the concentration of acidic catalyst in extract becomes high and the concentration of acidic catalyst remaining in polymer becomes high. For conducting extraction in high efficiency, multi-stage extraction is preferred.

In the multi-stage extraction, it is preferred that, in each stage, the polyamino acid derivative is separated from the extract consisting of the acidic catalyst and the extraction solvent, as sufficiently as possible and then the next-stage operation is conducted. Concretely, the amount of acidic catalyst contained in 100 parts by weight of solid polyamino acid derivative, is ordinary 50 parts by weight or less, preferably 30 parts by weight or less, more preferably 10 parts by weight or less, particularly preferably 5 parts by weight or less, most preferably 1 parts by weight or less.

The separation of the solid polyamino acid derivative from the extract can be conducted by, for example, a filter, a centrifuge, a sedimentation separator, a floatation separator or a combination thereof. The polyamino acid derivative separated from the extract may further be washed with the same or different extraction solvent to exchange the extract remaining in the polyamino acid derivative with the solvent. The amount of extraction solvent used for one step of the plural washing and exchanging steps is preferably 0.01 to 10 parts by weight, more preferably 0.05 to 5 parts by weight, particularly preferably 0.1 to 2 parts by weight per part by weight of the polyamino acid.

In the present invention, the temperature employed in extraction is 60°C or higher but 300°C or lower. When the temperature is lower than 60°C, the amount o of acidic catalyst remaining in polyamino acid derivative becomes high. Meanwhile, when it is higher than 300°C, the polyamino acid derivative gives rise to partial denaturation, inviting molecular weight reduction, coloration in some cases, and reduced polymer quality. The extraction temperature is preferably 75°C or higher but 250°C or lower, more preferably 90°C or higher but 220°C or lower, particularly preferably 100°C or higher but 200°C or lower.

The pressure employed in extraction is determined by the property of the extraction solvent used. When the extraction temperature is lower than the critical temperature of the extraction solvent, there is used such a pressure that at least part of the extraction solvent is in a liquid phase. For example, when extraction is conducted in an inert gas atmosphere of nitrogen, carbon dioxide, argon or the like, it is recommendable that the extraction system is allowed to be, owing to the inert gas, at a pressure at least equal to the saturated vapor pressure at extraction temperature, of the extraction solvent used.

When the extraction temperature is higher than the critical temperature of the extraction solvent, there is used such a pressure that at least part of the acidic catalyst can be dissolved in the extraction solvent. In this case, the extraction solvent is used as a noncondensable gas or a supercritical fluid.

In conducting multi-stage extraction, the temperatures and/or pressures in individual stages may be set at different values in the above ranges.

The extraction time is preferably 0.5 second to 12 hours, more preferably 1 second to 5 hours, more preferably 3 seconds to 2 hours, particularly preferably 5 seconds to 60 minutes, most preferably 10 seconds to 30 minutes. Here, the extraction time means the period during that the polymer contact with the extraction solvent and/or extract at a specific temperature for the extraction operation. An appropriately long extraction time ensures sufficient extraction and reduces the amount of acidic catalyst remaining in polyamino acid derivative. Meanwhile, an appropriately short extraction time needs no large-sized apparatus, makes easy the designing of apparatus, shortens the time of polyamino acid derivative exposure to heat, and can prevent the partial denaturation, molecular weight reduction, coloration and other quality deterioration of polyamino acid derivative.

[Form of polyamino acid derivative in extraction step)

The polyamino acid derivative fed to the extraction step is preferred to be particulate. A polyamino acid derivative in bulk form can be made into a particulate polyamino acid derivative, for example, by applying, to the polymer of bulk form, any desired dry grinding operation and/or wet grinding operation continuously or batchwise. The particulate polyamino acid derivative is allowed to have an average particle diameter of ordinary 5 mm or less, preferably 1 mm or less, more preferably 500 $\mu$m or less, particularly preferably 200 $\mu$m or less, most preferably 100 $\mu$m or less. In the present invention, it is not restricted thereto. Even when a bulk polymer having an average particle diameter larger than 5 mm is fed into the extraction step, if, in particular, an agitating tank is used in the extraction operation, the polymer is made fine with the progress of extraction of acidic catalyst and a polymer form suitable for extraction operation is obtained.

[Step for Polymer recovery)

A polyamino acid derivative containing low amount of the acidic catalyst remaining therein can be obtained by separating the mixture after the extraction step into a solid polyamino acid derivative and an extract consisting of the extraction solvent/acidic catalyst mixed solution.

As the separating operation in the polymer recovery step, the same method can be exemplified as the separating operation above-mentioned regarding the each stage in the multi-stage extraction. That is, concretely, The separating operation can be conducted by, for example, a filter, a centrifuge, a sedimentation separator, a floatation separator or a combination thereof.

[Amount of acidic catalyst remaining in polyamino acid derivative]

In the present invention, there is obtained, a polyamino acid derivative containing 1% by weight or less of an acidic catalyst or containing no acidic catalyst. When the acidic catalyst remains in the polyamino acid derivative in an amount of more than 1% by weight, there arise the previously mentioned problems (a) i) to vi). The amount of the residual acidic catalyst is preferably 0.0001 to 1% by weight, more preferably 0.0001 to 0.2% by weight, particularly preferably 0.0001 to 0.05% by weight, most preferably 0.0001 to 0.01% by weight. When the amount of the residual acidic catalyst is controlled at 0.0001% by weight or more, the amount of the extraction solvent used can be made appropriately small. The amount of the residual acidic catalyst can be measured by elemental analysis, X-ray analysis or the like.

[Step for acidic catalyst recovery]

The extract comprising the extraction solvent/acidic catalyst mixed solution, obtained from the extraction step is subjected to a step for acidic catalyst recovery, such as vaporization, distillation, liquid-liquid extraction, filtration, membrane separation, adsorption, ion exchange or a combination thereof, whereby the extract can be separated into a phase containing substantially the extraction solvent and a phase containing substantially the acidic catalyst.

When, for example, distillation operation is conducted for separation into the extraction solvent and acidic catalyst, feeding of water or steam during the distillation can further reduce the amount of the organic solvent remaining in the acidic catalyst after distillation. When the organic solvent used as the extraction solvent is immiscible with water, the vapor generated by the distillation is condensed and thereby an oily phase consisting mainly of the organic solvent and an aqueous phase consisting mainly of water are formed; of the two phases, only the oily phase is taken out and the extraction solvent low in water content can be recovered.

When the extract is immiscible with the different extraction solvent, it is also possible to conduct for separation into the extraction solvent and acidic catalyst by liquid-liquid extraction.

[Step for extraction solvent regeneration]

The recovered extraction solvent may contain impurities derived from polyamino acid derivative production. Reuse of the recovered extraction solvent per se in polyamino acid derivative production is not preferred because it may give a polyamino acid derivative of low quality (e.g. coloration and high impurities content). As the impurities, there can be mentioned, for example, organic substances (e.g. by-products formed during polymerization) and inorganic substances (e.g. metals derived from the corrosion of equipment material). When the recovered extraction solvent contains inconvenient or harmful impurities, the solvent is subjected, prior to reuse, to vaporization, distillation, liquid-liquid extraction, filtration, membrane separation, adsorption, ion exchange or a combination thereof to reduce the impurities content to a desired level and then reused.

[Step for acidic catalyst regeneration]

The acidic catalyst separated from the extraction solvent contains impurities derived from polyamino acid derivative production. Reuse of the acidic catalyst per se in polyamino acid derivative production is not preferred because it may give a polyamino acid derivative of low quality having coloration, etc. The impurities include, for example, organic substances (e.g. by-products formed during polymerization) and inorganic substances (e.g. metals) derived from the corrosion of equipment material, etc.

The step for making the acidic catalyst separated from the extraction solvent, reusable in polyamino acid derivative production comprises an operation for reducing the impurities contained in the acidic catalyst and/or a concentration operation. When these two operations are conducted, there is no restriction as to the order. Or, each operation may be repeated.

Specific operations conducted in the step for making the acidic catalyst separated from the extraction solvent, reusable in polyamino acid derivative production include vaporization, distillation, liquid-liquid extraction, oxidative decomposition, heating, filtration, membrane separation, adsorption and ion exchange. At least one of these operations is conducted to reduce the impurities (in this step, the impurities include water) contained in the acidic catalyst or to concentrate the acidic catalyst, whereby a purified acidic catalyst reusable in polyamino acid derivative production is obtained.

When, of the above operations, oxidative decomposition is conducted, at least one oxidizing agent selected from hydrogen peroxide, chloric acid, chlorates, chlorites, hypochlorites, perchloric acid and metal acid salts is preferably added to the recovered acidic catalyst. Of the above oxidizing agents, hydrogen peroxide is more preferred because it brings no impurities into the decomposition system.

When oxidative decomposition is conducted, the concentration of the acidic catalyst is controlled to be preferably 20% by weight or more, more preferably 30% by weight or more, particularly preferably 40% by weight or more because a higher acidic catalyst concentration makes easier the operation. Therefore, when the acidic catalyst concentration is low, it is preferred that the catalyst is first concentrated to a higher concentration and then oxidative decomposition is conducted.

The temperature at which oxidative decomposition is conducted, is preferably 50 to 250°C, more preferably 80 to 200°C, most preferably 100 to 170°C. When the temperature is too low, no sufficient oxidative decomposition is expected. When the temperature is too high, the corrosion of equipment material is striking, making difficult the designing of equipment.

The pressure at which oxidative decomposition is conducted, can be such that the mixture of the acidic catalyst and the oxidizing agent can maintain a liquid phase. In oxidative decomposition, a pressure may be applied by an inert gas such as nitrogen, carbon dioxide, argon or the like. The amount of the oxidizing agent used is determined by the content of organic substances in recovered acidic catalyst. For example, when hydrogen peroxide is used, as the standard for the amount, it is preferably 0.0001 to 0.5 part by weight, more preferably 0.001 to 0.1 part by weight per part by weight of the acidic catalyst. When the amount of the oxidizing agent used is too small, no sufficient intended effect is obtained. When the oxidizing agent is used in excess, no increased effect is obtained.

When heating operation is conducted, the temperature used is preferably 80 to 300°C, more preferably 100 to 200°C. When the temperature is too low, the effect of heating is small. When the temperature is too high, the corrosion of equipment material is striking, making difficult the designing of equipment.

When adsorption is conducted, an adsorbent such as active carbon or the like is used and adsorption can be conducted according to an ordinary method. Adsorption becomes more effective when combined with oxidative decomposition or with heating.

Concentration of the acidic catalyst is carried out at 80 to 300°C at ordinary pressure or under reduced pressure by the use of an evaporator, a thin-film evaporator, a submerged combustion apparatus or the like. The acidic catalyst is concentrated to a content of preferably 50% by weight or more, more preferably 70% by weight or more, particularly preferably 80% by weight or more, most preferably 85% by weight or more, and then is reused.

The present invention is hereinafter described in detail by way of Examples. However, the present invention is not restricted to these Examples.

In the present Examples, the amount of phosphoric acid catalyst used is a value when the phosphoric acid is expressed as orthophosphoric acid (molecular weight = 98).

The weight-average molecular weight of polymer was determined by dissolving the produced polymer in DMF (containing 0.01 mole/liter of lithium bromide) for molecular weight measurement and subjecting the resulting solution to GPC analysis. The concentration of residual phosphoric acid is a value obtained by elemental analysis.

Furthermore, an amount used of extraction solvent and an energy for separating the extract into the extraction solvent and the acidic catalyst were evaluated as follows.

An energy for separating the extract into the extraction solvent and the acidic catalyst are mainly energy necessary for evaporation of the extraction solvent. The energy necessary for evaporation of the extraction solvent can be summarized based on the latent heat of evaporation, which is one of the characteristics, and the amount used of extraction solvent. At the standard boiling point, the latent heat of evaporation per weight of extraction solvent is 1.1 [kJ/g] in methanol, 0.66 [kJ/g] in IPA, or 2.3 [kJ/g] in water.

Here, as an amount of extraction solvent used for extracting and removing the acidic catalyst, the "extraction solvent ratio" is defined by following equation.

$$\text{Extraction Solvent Ratio} = (\text{Weight of Solvent used for Extraction [g]} + \text{Weight of Solvent used for filtration [g]}) \div \text{Weight of PSI}$$

Furthermore, as an energy necessary for separating the extract into the extraction solvent and the acidic catalyst, the "energy ratio" is defined by following equation.

$$\text{Energy Ratio} = \text{Extraction Solvent Ratio} \times \text{Latent Heat of Evaporation [kJ/g]}$$

Furthermore, the "relative ratio" is defined as a value obtained by dividing each energy ratio in Examples by the energy ratio in Example 4

(1) production of polysuccinimides

Example 1

Into a 1-liter eggplant-shape flask, 133.1 g of L-aspartic acid (L-Asp) and 70.0 g of 85% (by weight) of phosphoric acid were fed. The flask was fitted to an evaporator.

The flask contents were heated to 140°C in 3 hours under a reduced pressure of 200 mmHg under rotation, whereby they became in a lump state through in a liquid state having a low viscosity. By heating to 185°C in 3 hours, the lump became a solid. Then, the solid was subjected to a reaction at 185 to 195°C for 10 hours under a reduced pressure of 5 mmHg ,cooled to room temperature, and then ground it to recover polysuccinimide (PSI) powder.

Next, the above PSI powder and 300 g of isopropyl alcohol (IPA) were fed into a reactor provided with a stirrer, then heated to 80°C with stirring for 1 hour to subject an extraction operation. Then, the mixture was cooled to room temperature and filtered. The filtered lump was washed with 100 g of IPA. This extraction and washing operation was repeated 10 times. The resulting material was dried to obtain 96.9 g of PSI. The results are shown below.

Yield: 96.9 g (99.7%)
Weight-average molecular weight (Mw): 118,000
Concentration of residual phosphoric acid: 0.19% by weight
Extraction solvent ratio: 41
Energy ratio: 27
Relative ratio: 1.4

Example 2

PSI powder was obtained in the same manner as in Example 1 except that the amount of 85% (by weight) of phosphoric acid was changed to 45.0 g.

Next, the above PSI powder and 310 g of IPA-phosphoric acid mixed solvent (20% phosphoric acid) were fed into a reactor provided with a stirrer, then heated to 80°C with stirring for 1 hour to subject an extraction operation. Then, the mixture was cooled to room temperature and filtered. The filtered lump was washed with 120 g of IPA. The next extraction and washing operation was conducted by using 310 g of IPA as extraction solvent and it was repeated 9 times. The resulting material was dried to obtain 97.0 g of PSI. The results are shown below.

Yield: 97.0 g (99.8%)
Weight-average molecular weight (Mw): 44,000
Concentration of residual phosphoric acid: 0.16% by weight
Extraction solvent ratio: 43
Energy ratio: 29
Relative ratio: 1.5

Example 3

Into a 300-cc eggplant-shape flask, 10.0 g of L-Asp and 5.2 g of 85% (by weight) of phosphoric acid were fed. The flask was fitted to an evaporator.

The flask contents were heated to 140°C in 3 hours under a reduced pressure of 200 mmHg under rotation, whereby they became in a lump state through in a liquid state having a low viscosity. By heating to 180°C in 2 hours, the lump became a solid. Then, the solid was subjected to a reaction at 180 to 190°C for 8 hours under a reduced pressure of 5 mmHg ,cooled to room temperature, and then ground it to recover polysuccinimide (PSI) powder.

Next, the reaction mass was filled in a flow reactor. Thereinto was continuously fed water at a rate of 4 g/min by the use of a high-pressure pump, whereby it was subjected to an extraction operation of fixed bed type at 140°C at 1 MPa for 40 minutes. Then, the mixture was cooled to room temperature to recover a wet cake of PSI. The wet cake was dried to obtain 6.6 g of PSI. The results are shown below.

Yield: 6.6 g (90.5%)
Weight-average molecular weight (Mw): 86,000
Concentration of residual phosphoric acid: 0.026% by weight
Extraction solvent ratio: 24
Energy ratio: 56
Relative ratio: 2.9

Example 4

PSI powder was obtained in the same manner as in Example 3 except that the amount of L-Asp was changed to 12.0 g, and that the amount of 85% (by weight) of phosphoric acid was changed to 6.5 g.

Next, the reaction mass was filled in an extractor. Thereinto was continuously fed methanol at a rate of 5 g/min by the use of a high-pressure pump, whereby it was subjected to an extraction operation of fixed bed type at 170°C at 2.5 MPa for 30 minutes. Then, the mixture was cooled to room temperature to recover a wet cake of PSI. The wet cake was dried to obtain 8.7 g of PSI. The results are shown below.

Yield: 8.7 g (98.8%)
Weight-average molecular weight (Mw): 104,000
Concentration of residual phosphoric acid: 0.072% by weight
Extraction solvent ratio: 17
Energy ratio: 19
Relative ratio: 1

Example 5

PSI powder was obtained in the same manner as in Example 3 except that the amount of L-Asp was changed to 9.0 g, and that the amount of 85% (by weight) of phosphoric acid was changed to 4.0 g.

Next, the reaction mass was filled in an extractor. Thereinto was continuously fed water-containing IPA (88 wt% of IPA, 12 wt% of water) at a rate of 4.5 g/min by the use of a high-pressure pump, whereby it was subjected to an extraction operation of fixed bed type at 190°C at 2.5 MPa for 25 minutes. Then, the mixture was cooled to room temperature to recover a wet cake of PSI. The wet cake was dried to obtain 6.2 g of PSI. The results are shown below.

Yield: 6.2 g (94.4%)
Weight-average molecular weight (Mw): 71,000
Concentration of residual phosphoric acid: 0.10% by weight
Extraction solvent ratio: 18
Energy ratio: 16
Relative ratio: 0.8

Comparative Example 1

PSI powder was obtained in the same manner as in Example 1. Into the reaction mass, 300 g of IPA powder was fed. The mixture was kept at 20°C for 1 hour to subject an extraction operation. The resulting mixture was then filtered to separate the filtrate. The filtered lump was washed with 110 g of IPA. This operation was repeated 14 times. The resultant was dried to obtain 102.3 g of PSI. The results are shown below.

Yield: 102.3 g (99.7%)
Weight-average molecular weight (Mw): 115,000
Concentration of residual phosphoric acid: 5.5% by weight
Extraction solvent ratio: 56
Energy ratio: 37
Relative ratio: 1.9

Comparative Example 2

PSI powder was obtained in the same manner as in Example 3. The reaction mass was filled in an extractor. Thereinto was continuously fed water at a rate of 4 g/min by the use of a high-pressure pump, whereby it was subjected to an extraction operation of fixed bed type at 15°C at 0.1 MPa for 20 hours. Then, the mixture was cooled and dried to obtain 7.3 g of PSI. The results are shown below.

Yield: 7.3 g (99.6%)
Weight-average molecular weight (Mw): 119,000
Concentration of residual phosphoric acid: 1.2% by weight
Extraction solvent ratio: $6.6 \times 10^2$
Energy ratio: $1.5 \times 10^3$
Relative ratio: 79

Comparative Example 3

PSI powder was obtained in the same manner as in Example 3. The reaction mass was filled in an extractor. Thereinto was continuously fed water-containing IPA (88 wt% of IPA, 12 wt% of water) at a rate of 5 g/min by the use of a high-pressure pump, whereby it was subjected to an extraction operation of fixed bed type at 330°C at 20 Mpa. After 20 minutes later, the extract-cooling pipe of extractor at exit side was stooped up, and the pressure became too high so that the extraction operation was stopped. The resulting mixture was cooled to room temperature, and a wet cake of PSI was recovered from inside the extractor. Then, the wet cake was dried to obtain 1.5 g of PSI. The results are shown below.

Yield: 1.5 g
Crude yield (actual yield per theoretical yield): 20.6%
Weight-average molecular weight (Mw): 14,000

Comparative Example 4

PSI powder was obtained in the same manner as in Example 3. Next, the reaction mass was filled in a flow reactor. Thereinto was continuously fed water at a rate of 5 g/min by the use of a high-pressure pump, whereby it was subjected to an extraction operation of fixed bed type at 340°C at 15 MPa. After 15 minutes later, the extract-cooling pipe of extractor at exit side was stooped up, and the pressure became too high so that the extraction operation was stopped. The resulting mixture was cooled to room temperature, and a wet cake of PSI was recovered from inside the extractor. Then, the wet cake was dried to obtain 0.6 g of PSI. The results are shown below.

Yield: 0.6 g

Crude yield: 8.2%

The results of Examples 1 to 5 (and Example 6 described later) are shown in Table 1, and the results of Comparative Examples 1 to 4 are shown in Table 2.

12

Table 1: Results of polysuccinimide production in Examples 1 to 6

| | | Extra-ction Temp. (°C) | Extraction Solvent | Mw [1] | Residual Phosphoric Acid [2] | Extraction Solvent Ratio | Energy Ratio | Relative Ratio [-] |
|---|---|---|---|---|---|---|---|---|
| Examples | 1 | 80 | IPA | 118,000 | 0.19 | 41 | 27 | 1.4 |
| | 2 | 80 | ·80 wt% of IPA + 20 wt% of phosphoric acid<br><br>·IPA | 44,000 | 0.16 | 43 | 29 | 1.5 |
| | 3 | 140 | Water | 86,000 | 0.026 | 24 | 56 | 2.9 |
| | 4 | 170 | Metanol | 104,000 | 0.072 | 17 | 19 | 1 |
| | 5 | 190 | ·88 wt% of IPA + 12 wt% of water | 71,000 | 0.10 | 18 | 16 | 0.8 |
| | 6 | 185 | recovered extraction solvent<br><br>·88 wt% of IPA + 12 wt% of water | 97,000 | 0.13 | 20 | 17 | 0.9 |

Notes
1): The weight-average molecular weight of polysuccinimide after extraction operation for acidic catalyst
2): The weight %, based on the dry weight of polysuccinimide, of phosphoric acid remaining in polysuccinimide after extraction operation for acidic catalyst

EP 0 926 184 A1

Table 2: Results of polysuccinimide production in Comparative Examples 1 to 4

| | | Extra-ction Temp. (°C) | Extraction Solvent | $M_w$ 1) | Residual Phosphoric Acid 2) | Extraction Solvent Ratio | Energy Ratio | Relative Ratio [-] |
|---|---|---|---|---|---|---|---|---|
| Comparative Examples | 1 | 20 | IPA | 115,000 | 5.5 | 56 | 37 | 1.9 |
| | 2 | 15 | Water | 119,000 | 1.2 | $6.6 \times 10^2$ | $1.5 \times 10^3$ | 79 |
| | 3 | 330 | ·88 wt% of IPA + 12 wt% of water | 14,000 | - | - | - | - |
| | 4 | 340 | Water | - | - | - | - | - |

Notes     1) and 2): Same as in Table 1

Example 6

By repeating 4 times the same process as in Example 5, 442 g of extract was obtained. Among it, 400 g of extract was filtered, and then it was concentrated to 47 g using an evaporator and to recover it. Then, it was transferred into a 500 ml evaporation flask. Under a reduced pressure of 20 mmHg, it was heated at 90°C, and at the temperature, it was concentrated with adding a small amount of water for 4 hours to separate and recover 23.6 g of crude phosphoric acid and the extraction solvent. Among the crude phosphoric acid, 7.0 g threreof was transferred into a reactor. Thereto was added 1 g of a 35% (by weight) aqueous hydrogen peroxide solution with stirring. Under a pressure of nitrogen gas, the mixture was heated to 140°C and kept at that temperature for 4 hours. Then, the mixture was cooled to room temperature, free from the pressure, and filtered. The crude phosphoric acid was concentrated to be 85% (by weight) concentration.

PSI powder was obtained in the same manner as in Example 3 except that 4.0 g of the phosphoric acid, which was obtained by the above recovery and concentration, with 8.0 g of L-Asp.

Next, the reaction mass was filled in an extractor. Thereinto was continuously fed the recovered water-containing IPA (88 wt% of IPA, 12 wt% of water) at a rate of 4.4 g/min by the use of a high-pressure pump, whereby it was subjected to an extraction operation of fixed bed type at 185°C at 2.5 MPa for 25 minutes. Then, the mixture was cooled to room temperature to recover a wet cake of PSI. The wet cake was dried to obtain 5.6 g of PSI. The results are shown below.

Yield: 5.6 g (95.4%)
Weight-average molecular weight (Mw): 97,000
Concentration of residual phosphoric acid: 0.13% by weight
Extraction solvent ratio: 20
Energy ratio: 17
Relative ratio: 0.9

Comparative Example 5

PSI was obtained in the same manner as in Example 1 except that 7 g of the crude phosphoric acid, which was obtained by the only recovery in Example 6 as it is, with 8.0 g of L-Asp to obtain PSI. The weight-average molecular weight of PSI was 85,000. However, it was remarkably colored compared with that in Example 6.

Comparative Example 6

Into a reactor, 7 g of the crude phosphoric acid recovered in Example 6 was transferred. Thereto was added 1.5 g of a 35% (by weight) aqueous hydrogen peroxide solution with stirring at 40°C, and the temperature was maintained for 4 hours. Then, the mixture was cooled to room temperature and filtered. The crude phosphoric acid was concentrated to be a 85% (by weight) concentration. Into a polymerizer, 4.0 g of the concentrated phosphoric acid was fed together with 8.0 g of L-Asp. The mixture was subjected to the same operation as in Example 5 to obtain PSI. The weight-average molecular weight of PSI was 88,000. However, it was remarkably colored compared with that in Example 6.

The results of Example 6 and Comparative Examples 5 and 6 are shown in Table 3.

**Table 3: Results of acidic catalyst recycling in Example 6
and Comparative Examples 5 and 6**

| | | Treatment Temp. (°C) | Treatment with | Mw[1] | Coloration[2] |
|---|---|---|---|---|---|
| Example | 6 | 140 | Hydrogen Peroxide | 97,000 | No |
| Comparative Examples | 5 | - | No Treatment | 85,000 | Yes |
| | 6 | 40 | Hydrogen Peroxide | 88,000 | Yes |

**Notes**
1): The weight-average molecular weight of polysuccinimide produced by using recovered acidic catalyst
2): Partial coloration of polysuccinimide produced by using recovered acidic catalyst

(2) Production of crosslinked polyaspartic acids

In the following Example 7 and Comparative Example 8, the yield is a value obtained by dividing weight of resulted water absorbent polymer by total weight evaluating polysuccinimide as sodium salt of polyaspartic acid, L-lysine hydrochloride as sodium salt of L-lysine, and methyl L-lysinate dihydrochloride as methyl L-lysinate.

Example 7

Into a flask provided with a stirrer were fed 38.8 g of DMF and 9.7 g of a polysuccinimide (0.1 mole, phosphoric acid adhering thereto: 0.08% by weight) obtained in the same operation as in Example 4. Thereinto was fed, in a nitrogen current at 25 to 30°C in 30 minutes, 7.7 g of a crosslinking agent mixture [a solution obtained by neutralizing, with 0.8 g (0.019 mole) of 95% sodium hydroxide, the hydrochloric acid of a mixed solution consisting of 2.3 g (0.012 mole) of L-lysine hydrochloride, 0.7 g (0.003 mole) of methyl L-lysinate dihydrochloride, and 3.9 g of deionized water]. After 25 minutes at 25 to 30°C, the reaction mass became a gel (typical with crosslinked materials) and stirring was stopped. Then, the reaction mass was allowed to stand at that temperature for 19 hours.
Next, a mixed solution consisting of 77.6 g of deionized water and 38.8 g of IPA was fed into a mixer. Thereto was added the crosslinked material gel obtained above, with stirring, to precipitate a solid. Then, 15.3% sodium hydroxide was added at 25 to 30°C to hydrolyze the crosslinked material with keeping pH 11 to 12. The resulting mixture was neutralized with a 7% hydrochloric acid solution to pH 7, followed by filtration. The cake was washed with an IPA solution containing 55% of water and then dried to obtain 14.9 g (92%) of a crosslinked polyaspartic acid.
The deionized water absorption of the obtained polymer (absorption per 1 g of polymer) was 590 g (after 40 minutes).

Comparative Example 7

Into a flask provided with a stirrer were fed 38.8 g of DMF and 10.03 g of PSI (0.1 mole, phosphoric acid adhering thereto: 3.3% by weight) obtained in the same operation as in Comparative Example 1. Thereinto was fed, in a nitrogen current at 25 to 30°C in 30 minutes, 7.7 g of a crosslinking agent mixture [a solution obtained by neutralizing, with 0.8 g (0.019 mole) of 95% sodium hydroxide, the hydrochloric acid of a mixed solution consisting of 2.3 g (0.012 mole) of L-lysine hydrochloride, 0.7 g (0.003 mole) of methyl L-lysinate dihydrochloride, and 3.9 g of deinonized water].

The resulting mixture was stirred at 25 to 30°C for 47 hours, but the reaction mass did not become a gel (typical with crosslinked materials).

Comparative Example 8

Into a flask provided with a stirrer were fed 38.8 g of DMF and 9.98 g of a polysuccinimide (0.1 mole, phosphoric acid adhering thereto: 2.8% by weight) obtained in the same operation as in Comparative Example 1. Thereinto was fed, in a nitrogen current at 25 to 30°C in 30 minutes, 7.8 g of a crosslinking agent mixture [a solution obtained by neutralizing, with 0.93 g (0.022 mole) of 95% sodium hydroxide, the hydrochloric acid of a mixed solution consisting of 2.3 g (0.012 mole) of L-lysine hydrochloride, 0.7 g (0.003 mole) of methyl L-lysinate dihydrochloride and 3.9 g of deionized water]. The resulting mixture was stirred at the same temperature for 22 hours. The subsequent operation was the same as in Example 10, to obtain 12.4 g (76%) a water-absorptive polymer.

The deionized water absorption of the obtained polymer (absorption per 1 g of polymer) was 210 g (after 40 minutes).

The results of Example 7 and Comparative Examples 7 and 8 are shown in Table 4.

### Table 4: Results of crosslinked polyaspartic acid production from polysuccinimide in Example 7 and Comparative Examples 7 and 8

| | | Acidic Catalyst Content in Polysuccinimide (wt. %) | Water Absorption per g of Polymer (g) |
|---|---|---|---|
| Example | 7 | 0.08 | 590 |
| Comparative Examples | 7 | 3.3 | No water-absorptive polymer was formed. |
| | 8 | 2.8 | 210 |

[Comparison of Examples and Comparative Examples]

(1) Production of polysuccinimides

In Comparative Examples 1 and 2, extraction of acidic catalyst was conducted at a low temperature (about room temperature); therefore, the concentration of residual acidic catalyst was high. Furthermore, the energy for necessary for separating the extract into the extraction solvent and the acidic catalyst became to be very high. For example, in Comparative Example 2 wherein extraction of acidic catalyst was conducted at a low temperature, the concentration of residual acidic catalyst was higher than that in Example 4 wherein extraction of acidic catalyst was conducted at a high temperature. Furthermore, for separating the extract into the extraction solvent and the acidic catalyst, in Comparative Example 2, it was necessary to use about 80 times as very high energy as that in Example 4. In Comparative Examples 3 and 4, extraction of acidic catalyst was tried at very high temperatures; therefore, decomposition and denaturation of polymer took place. In Comparative Example 5, the recovered acidic catalyst was reused per se; therefore, part of the polyamino acid derivative formed showed coloration. In Comparative Example 6, the recovered acidic catalyst was treated with an oxidizing agent at a low temperature and reused; therefore, part of the polysuccinimide formed showed coloration.

In contrast, in Examples 1 to 6, a polysuccinimide low in residual acidic catalyst content could be produced efficiently and, moreover, reuse of acidic catalyst and extraction solvent was possible.

(2) Production of crosslinked polyaspartic acids

In Comparative Example 7, it was tried to obtain a crosslinked polyaspartic acid as a water-absorptive polymer from a polysuccinimide high in residual acidic catalyst content; however, no water-absorptive polymer could be obtained. In Comparative Example 8, it was tried to crosslink a polysuccinimide high in residual acidic catalyst content; however, the properties and yield of the water-absorptive polymer formed were low.

In contrast, in Example 7, by using a polysuccinimide low in residual acidic catalyst content, it was possible to obtain, at a high yield, a crosslinked polyaspartic acid low in residual acidic catalyst content and high in water absorptivity.

Thus, according to the present invention, it is possible to produce a polyamino acid derivative significantly low in acidic catalyst content in high efficiency, and further to recover the acidic catalyst and/or extraction solvent used in production of said polyamino acid derivative and recycle (reuse) them, using low energy. Moreover, the polysuccinimide significantly low in acidic catalyst content is suitable for use as a raw material for production of a crosslinked polyaspartic acid useful as a water-absorptive polymer.

## Claims

1.   A process for producing a polyamino acid derivative containing an acidic catalyst in an amount of 1% by weight or less, or no acidic catalyst, which process comprises an extraction step (Step A) of extracting and removing an acidic catalyst with an extraction solvent from a polyamino acid derivative containing the acidic catalyst,
     wherein the extraction solvent does not substantially dissolve the polyamino acid derivative and dissolves at least a part of the acidic catalyst in the extraction step, and the extraction temperature employed in the extraction step is 60°C or higher but 300°C or lower.

2.   A process for producing a polyamino acid derivative according to Claim 1, wherein the extraction solvent has a critical temperature of lower than 300°C and the extraction temperature employed in the extraction step is 60°C or higher but lower than the critical temperature.

3.   A process for producing a polyamino acid derivative according to Claim 1, wherein the extraction solvent has a critical temperature of lower than 300°C, the extraction temperature employed in the extraction step is higher than the critical temperature but 300°C or lower, and the extraction solvent is in a state of a noncondensable gas and/or supercritical fluid during the extraction.

4.   A process for producing a polyamino acid derivative according to Claim 1, which further comprises:

     a polymer recovery step (Step B) of separating the mixture after the extraction step (Step A) into a solid polyamino acid derivative and an extract consisting of the extraction solvent/acidic catalyst mixed solution, and an acidic catalyst recovery step (Step C) of separating the extract into a phase containing substantially the extraction solvent and a phase containing substantially the acidic catalyst.

5.   A process for producing a polyamino acid derivative according to Claim 4, which further comprises:

     an extraction solvent-regenerating step (Step D) of isolating the extraction solvent from the phase containing substantially the extraction solvent, which was obtained in the acidic catalyst recovery step (Step C), to obtain the extraction solvent reusable in the extraction step (Step A), and/or

an acidic catalyst-regenerating step (Step E) of isolating the acidic catalyst from the phase containing substantially the acidic catalyst, which was obtained in the acidic catalyst recovery step (Step C), to obtain the acidic catalyst reusable in the reaction for obtaining a polyamino acid derivative.

6. A process for producing a polyamino acid derivative according to Claim 5, wherein the extraction solvent-regenerating step (Step D) comprises applying, to the phase containing substantially the extraction solvent, at least one operation selected from the group consisting of vaporization, distillation, liquid-liquid extraction, filtration, membrane separation, adsorption and ion exchange to lower the content of the impurities present in the phase and recover the extraction solvent to obtain a purified extraction solvent.

7. A process for producing a polyamino acid derivative according to Claim 5, wherein the acidic catalyst-regenerating step (Step E) comprises applying, to the phase containing substantially an acidic catalyst, at least one operation selected from the group consisting of vaporization, distillation, liquid-liquid extraction, oxidative decomposition, heating, filtration, membrane separation, adsorption and ion exchange to lower the content of the impurities present in the phase and recover the acidic catalyst to obtain a purified acidic catalyst.

8. A process for producing a polyamino acid-derivative according to Claim 1, wherein the acidic catalyst comprises an oxo-acid containing phosphoric acid.

9. A process for producing a polyamino acid derivative according to Claim 8, wherein the oxo-acid containing phosphoric acid comprises at least one acid selected from the group consisting of orthophosphoric acid, pyrophosphoric acid, polyphosphoric acid and phosphorus pentoxide.

10. A process for producing a polyamino acid derivative according to Claim 1, wherein the extraction solvent is an organic solvent.

11. A process for producing a polyamino acid derivative according to Claim 1, wherein the extraction solvent is a mixed solvent of (1) an organic solvent and (2) water and/or an acidic catalyst.

12. A process for producing a polyamino acid derivative according to Claim 1, wherein the extraction solvent comprises at least one organic solvent selected from the group consisting of alcohols having 1 to 9 carbon atoms, ketones having 3 to 9 carbon atoms, ethers having 3 to 9 carbon atoms and acetic acid esters having 3 to 9 carbon atoms.

13. A process for producing a polyamino acid derivative according to Claim 12, wherein the extraction solvent comprises at least one compound selected from the group consisting of methanol, isopropyl alcohol and acetone.

14. A process for producing a polyamino acid derivative according to Claims 1, wherein the extraction solvent is water or a mixed solvent of water and an acidic catalyst.

15. A process for producing a polyamino acid derivative according to Claim 1, wherein a polyamino acid derivative having a weight-average molecular weight of 30,000 or larger is obtained.

16. A process for producing a polyamino acid derivative according to Claim 1, wherein the polyamino acid derivative is a polysuccinimide and/or a polyaspartic acid, or wherein the polyamino acid derivative is a crosslinked-polysuccinimide and/or a crosslinked-polyaspartic acid.

17. A process for producing a polyamino acid derivative according to Claim 1, wherein a polyamino acid derivative containing 0.0001 to 0.2% by weight of an acidic catalyst is obtained.

18. A polyamino acid derivative obtainable by a process set forth in any of the claims 1 to 17.

European Patent Office

**EUROPEAN SEARCH REPORT**

Application Number

EP 98 12 4560

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 096, no. 007, 31 July 1996 & JP 08 059821 A (AJINOMOTO CO INC), 5 March 1996 * abstract * | 1-18 | C08G73/10 C08G69/48 |
| A | PATENT ABSTRACTS OF JAPAN vol. 097, no. 010, 31 October 1997 & JP 09 165446 A (MITSUBISHI CHEM CORP), 24 June 1997 * abstract * | 1-18 | |
| A | EP 0 640 641 A (MITSUI TOATSU CHEMICALS) 1 March 1995 * claims 1-10 * | 1-18 | |
| A,P | US 5 770 553 A (SCHWENDEMANN VOLKER ET AL) 23 June 1998 * claims 1,2; example 8 * | 1-18 | |
| A | US 5 142 062 A (LEHMANN KLAUS ET AL) 25 August 1992 * claims 1-14 * | 1-18 | TECHNICAL FIELDS SEARCHED (Int.Cl.6) C08G |
| A | TOMIDA M ET AL: "Convenient synthesis of high molecular weight poly(succinimide) by acid-catalysed polycondensation of l-aspartic acid" POLYMER, vol. 38, no. 18, 1997, page 4733-4736 XP004085697 * the whole document * | 1-18 | |

The present search report has been drawn up for all claims

| Place of search | Date of completion of the search | Examiner |
|---|---|---|
| THE HAGUE | 30 March 1999 | Glanddier, A |

EPO FORM 1503 03.82 (P04C01)

**ANNEX TO THE EUROPEAN SEARCH REPORT
ON EUROPEAN PATENT APPLICATION NO.** EP 98 12 4560

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-1999

| Patent document cited in search report | | Publication date | Patent family member(s) | | Publication date |
|---|---|---|---|---|---|
| EP 0640641 | A | 01-03-1995 | CN 1103411 | A,B | 07-06-1995 |
| | | | JP 7126379 | A | 16-05-1995 |
| | | | US 5484945 | A | 16-01-1996 |
| US 5770553 | A | 23-06-1998 | DE 4342316 | A | 14-06-1995 |
| | | | AT 172238 | T | 15-10-1998 |
| | | | CA 2174224 | A | 15-06-1995 |
| | | | DE 59407107 | D | 19-11-1998 |
| | | | WO 9516020 | A | 15-06-1995 |
| | | | EP 0740696 | A | 06-11-1996 |
| | | | ES 2124519 | T | 01-02-1999 |
| | | | JP 9506386 | T | 24-06-1997 |
| US 5142062 | A | 25-08-1992 | DE 4023463 | A | 30-01-1992 |
| | | | FR 2665166 | A | 31-01-1992 |
| | | | GB 2246786 | A,B | 12-02-1992 |
| | | | SE 505100 | C | 23-06-1997 |
| | | | SE 9101573 | A | 25-01-1992 |

EPO FORM P0459

For more details about this annex : see Official Journal of the European Patent Office, No. 12/82